# EUROPÄISCHE PATENTSCHRIFT

(11) **EP 1 543 713 B1**
(45) Veröffentlichungstag und Bekanntmachung des Hinweises auf die Patenterteilung: **16.04.2008**
(21) Anmeldenummer: 04029516.4
(22) Anmeldetag: 14.12.2004
(51) Int. Cl.: A01D 43/08

(54) **Erntegerät**
Harvester
Appareil à récolter

(30) Priorität: 18.12.2003 DE 10359401
(43) Veröffentlichungstag der Anmeldung: 22.06.2005
(73) Patentinhaber: Maschinenfabrik Bernard Krone GmbH, 48480 Spelle (DE)
(72) Erfinder: Krone, Bernard, Dr., 48480 Spelle (DE); Horstmann, Josef, Dr., 49479 Ibbenbüren (DE)

(56) Entgegenhaltungen:
- DE-B- 1 279 994
- US-A- 4 182 098
- US-A- 5 845 474

## Beschreibung

Die Erfindung bezieht sich auf ein Emtegerät zum Ernten von Mais oder dergleichen stängelartigem Erntegut nach dem Oberbegriff des Patentanspruchs 1. Ein derartiges Emtegerät wird insbesondere als Vorsatzgerät für selbstfahrende Erntemaschinen wie Feldhäcksler eingesetzt. Es dient dem Abschneiden, Aufnehmen und dem Überführen des Erntegutes an die Weiterverarbeitungsmaschine. Dazu umfasst ein Erntegerät der vorgenannten Art Schneidmittel und Fördermittel, in diesem Fall in der Art eines umlaufenden Endlosförderers.

Bei den aus dem Stand der Technik bekannten Erntegeräten unterschiedlichster Gestaltung finden sich ebenso unterschiedliche Schneideinrichtungen. Die gattungsgemäßen Erntegeräte nach dem Oberbegriff des Anspruchs 1 weisen in der Regel eine Schneideinrichtung auf, bei der zusammen mit Förder- und Führungselementen umlaufende Schneidmesser im Zusammenwirken mit feststehenden Gegenschneiden das Erntegut abschneiden. Bei derartigen Schneideinrichtungen ist eine gute Führung der Schneidmesser zu den Gegenschneiden und eine möglichst dauerhafte optimale Schneidengeometrie entscheidend für eine gute Funktion. Besonders bei den größeren Erntegeräten dieser Art ist ein besonders hoher konstruktiver Aufwand mit sehr stabilen Führungen notwendig um einen möglichst geringen Schneidspalt zwischen den Schneidelementen unter allen Bedingungen zu gewährleisten.

Eine zufriedenstellende Standzeit der Schneidelemente, die durch ihren bodennahen Einsatz einem besonders großen Verschleiß ausgesetzt sind, ist nur durch immer höherwertige Materialien erreichbar.

Ein Erntegerät der vorgenannten Art, welches als Vorsatzgerät für eine weiterverarbeitende Erntemaschine ausgebildet ist, ist unter anderem aus der US 5 845 474 A bekannt. Das offenbarte Erntegerät umfasst eine Schneideinrichtung mit einem flexiblen umlaufenden Trägerelement in Form einer speziellen Gliederkette, an der nach außen gerichtet angebrachte Schneidmesser eine Schneidebene bilden. Zur Bildung einer Gegenschneide und gleichzeitigen Führung der Schneidelemente werden diese im in Fahrtrichtung nach vorne gerichteten Bereich des Erntegerätes, in dem das Erntegut abgetrennt werden soll, von in gleichmäßigen Abständen am Grundrahmen des Erntegerätes angebrachten Führungselementen umschlossen, wobei diese Führungselemente an ihrer inneren Unterseite die Gegenschneide zu den sie durchlaufenden Schneiden an dem flexiblen Trägerelement bilden.

Diese Gestaltung der Schneideinrichtung ist unempfindlicher gegen Verwindung und Durchbiegung des gesamten Erntegerätes, bedarf aber insbesondere im Frontbereich einen stabilen Grundrahmen für die Aufnahme der Führungselemente und ist nachteilig durch die vielen Kontaktstellen und sehr kleinen Führungsflächen einem hohen Verschleiß ausgesetzt, der sich sofort auf den Schneidspalt und damit auf die Funktion negativ auswirkt.

Aufgabe der Erfindung ist es daher, ein Erntegerät der eingangs genannten Art dahingehend weiterzubilden, dass die Abhängigkeit der Funktionssicherheit von Führung und Verschleiß der Schneideinrichtung bei vereinfachtem Aufbau und erhöhter Standzeit wesentlich reduziert wird.

Zur Lösung dieser Aufgabe zeichnet sich das Erntegerät der eingangs genannten Art durch die im kennzeichnenden Teil des Anspruches 1 angegebenen Merkmale aus. Hinsichtlich weiterer vorteilhafter Ausgestaltungen wird auf die weiteren Ansprüche verwiesen.

Wesentlicher Vorteil des Erntegerätes nach der Erfindung ist die Trennung der Schneideinrichtung von der Fördereinrichtung. Durch die Anbringung der Schneidelemenge an einem separaten umlaufenden flexiblen Trägerelement unterhalb des umlaufenden Endlosförderers, kann die Umlaufgeschwindigkeit und die Umlaufrichtung unabhängig vom Endlosförderer gewählt werden. Somit ist es möglich die Schneidelemente mit einer derart hohen Geschwindigkeit umlaufen zu lassen, dass sie erfindungsgemäß im freien Schnitt, ohne die Notwendigkeit von Gegenschneiden das Erntegut abschneiden. Als Trägerelement ist dabei vorteilhaft ein Riemen in der Art eines Zahnriemens denkbar. Aber auch ein Sonderriemen mit speziellen Befestigungsmöglichkeiten für die Schneidelemente, oder auch eine Gliederkette in irgend einer vorteilhaften Form ist denkbar.

Die nicht mehr vorhandene Notwendigkeit von Gegenschneiden wirkt sich mehrfach vorteilhaft für das erfindungsgemäße Emtegerät aus. Erstens ist die Einsparung der Gegenschneiden eine Kosteneinsparung durch weniger Teile und geringeren Montageaufwand. Zweitens wird der konstruktive Aufbau des Erntegerätes wesentlich im Bereich der Schneidelementeführung und durch den Entfall der Gegenschneidenhalterung vereinfacht und gewichtsreduziert. Besonders gewichtsreduzierend wirkt sich auch der nun mögliche Einsatz leichterer Materialien wie z. B. Gummiriemen statt Stahlkette als Trägerelement der Schneidelemente und einer insgesamt leichteren, da nicht mehr notwendigerweise verwindungssteifen Konstruktion aus.

Des weiteren wirkt sich die Schneidengeometrie und damit die Standzeit der Schneiden bei frei schneidenden Schneidelementen nicht so entscheidend auf die Funktionssicherheit der Schneideinrichtung aus wie bei einer Schneideinrichtung, die praktisch scherend mit Gegenschneiden das Erntegut abschneidet. Wird bei einer Schneideinrichtung mit Gegenschneiden das Erntegut durch einen zu großen Schneidspalt oder durch nachlassende Schärfe der Schneiden nicht optimal geschnitten, kommt es je nach Emtebedingung schnell zum Aufbau von Pflanzenteilen an den Schneidelementen und deren Umfeld, die im weiteren Verlauf zu Störungen des Gutflusses bis zur Arbeitsunterbrechung führen können.

Besonders der Vorteil der Gewichtsreduzierung des erfindungsgemäßen Erntegerätes spielt bei den zunehmenden Arbeitsbreiten und damit auch zunehmenden Gewichten derartiger Erntegeräte eine ganz entscheidende Rolle.

Damit ist ein Emtegerät der eingangs beschriebenen Art insgesamt und insbesondere wesentlich in der Standzeit und in der Funktionssicherheit der Schneideinrichtung verbessert worden. Weitere Vorteile und Einzelheiten der Erfindung ergeben sich aus der nachfolgenden Beschreibung und der Zeichnung.

In der Zeichnung stellt im einzelnen dar:
- **Fig. 1:**: eine perspektivische Ansicht eines vorderen Teiles einer selbstfahrenden Erntemaschine (2) mit einem erfindungsgemäßen Emtegerät (1) als Vorsatz;
- **Fig. 2:**: eine perspektivische Ansicht eines teilweise demontierten und freigelegten Schneid- und Förderaggregates (4)
- **Fig. 3:**: eine vergrößerte Darstellung des Ausschnittes X aus Fig. 2.
- **Fig. 4:**: eine Draufsicht eines teilweise demontiertes Schneid- und Förderaggregates (4);

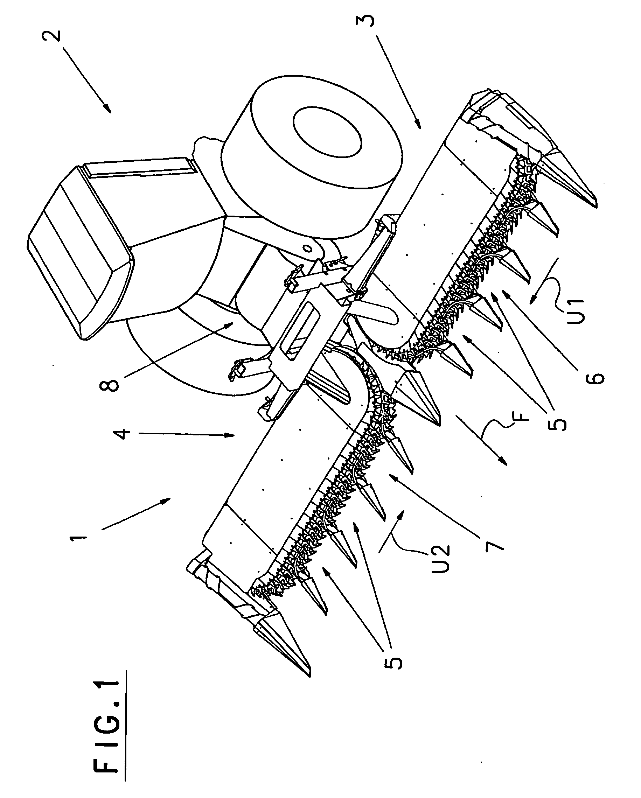

Eine bevorzugte Ausführungsform eines Erntegerätes 1, das insbesondere als Vorsatzgerät für eine selbstfahrende Erntemaschine 2 in der Art eines Häckslers zum reihenunabhängigen Ernten von stängelartigem Erntegut wie Mais oder dgl. eingesetzt wird, ist in Fig. 1 in seiner Arbeitsstellung, angebaut an einer nur teilweise dargestellten Erntemaschine 2 gezeigt. Ein derartiges Erntegerät 1 besteht vorzugsweise aus zwei spiegelbildlichen in ihrer längsten Ausrichtung quer zur Fahrt- und Arbeitsrichtung F ausgerichteten Schneid- und Förderaggregaten 3, 4, die so nebeneinander angeordnet sind, dass ein durchgehender Emtegutstreifen mit grosser Arbeitsbreite abgeerntet werden kann. Für den Straßentransport können die Schneid- und Förderaggregate 3, 4 derart in eine annähernd senkrechte Stellung geschwenkt werden, dass die Straßenverkehrsvorschriften bezüglich der Fahrzeugabmessungen eingehalten werden.

Jedes Schneid- und Förderaggregat 3, 4 ist mit einem mit nach außen weisenden Halte- und Führungselementen 5 versehenen umlaufenden Endlosförderer 6, 7 ausgestattet. Durch die gegensinnigen Umlaufrichtungen U1, U2 der Endlosförderer 6, 7 wird von diesen erfasstes und abgeschnittenes Erntegut zur Mitte des Erntegerätes 1 gefördert und dort dem Einzugs- und Häckselaggregat 8 der Erntemaschine 2 zur Weiterverarbeitung zugeführt.

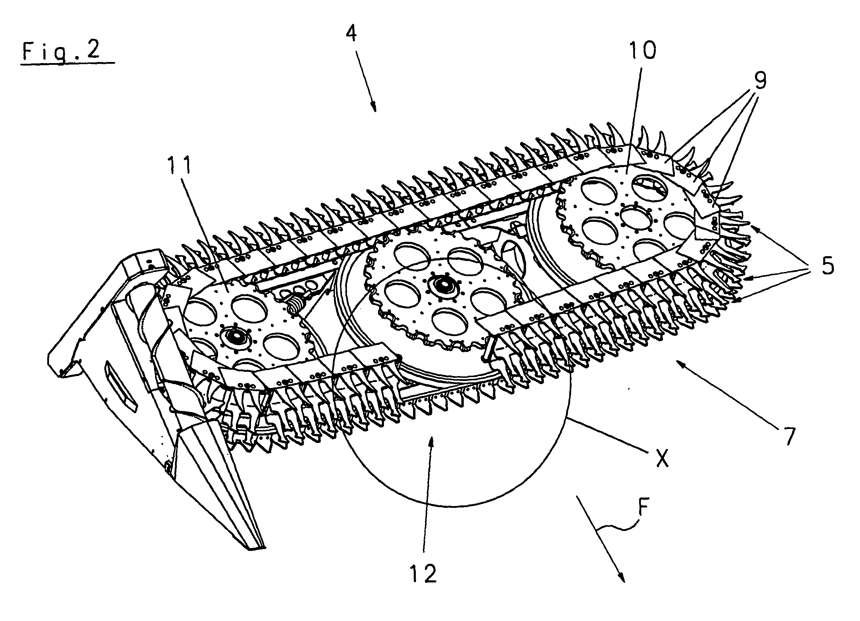

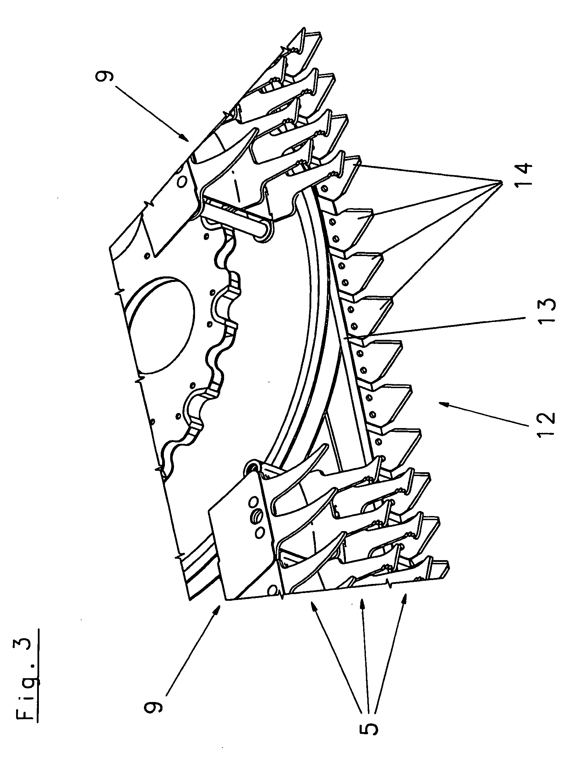

Fig. 2 zeigt ein in Fahrt- und Arbeitsrichtung F gesehen rechtes Schneid- und Förderaggregat 4 eines erfindungsgemäßen Erntegerätes 1. Zur besseren Erkennbarkeit der wesentlichen Erfindungsmerkmale sind verschiedene Bauteile und Verkleidungen sowie ein paar Segmente 9 des Endlosförderers 7 im gekennzeichneten Bereich X entfernt. Der aus gelenkig miteinander verbundenen Segmenten 9 bestehende Endlosförderer 7 wird durch das Antriebsrad 10 in Verbindung mit dem Umlenkrad 11 umlaufend angetrieben. Ebenso umlaufend wird die Schneideinrichtung 12 angetrieben und umgelenkt. In der vergrößerten Darstellung der Fig. 3 ist die aus einem Riemen 13 mit an diesem angebrachten, nach außen gerichteten Schneidelementen 14 gebildete Schneideinrichtung 12 gut erkennbar. Im gezeigten Ausführungsbeispiel befinden sich jeweils die Antriebsräder 10 und Umlenkräder 11 für den Endlosförderer 6 und die Schneideinrichtung 12 auf gemeinsamen Achsen. Dieses ist jedoch keine Notwendigkeit, da der Endlosförderer 6 und die Schneideinrichtung 12 völlig unabhängig voneinander in Umlaufrichtung und Umlaufgeschwindigkeit angetrieben sein können. Die Umlaufrichtungen U1, U2 für den Endlosförderer 6, 7 während der Arbeitsfahrt steht durch die funktionsbedingte Förderrichtung zur Maschinenmitte fest. Da die Schneidelemente 14 der Schneideinrichtung 12 die stängelartigen Erntegutpflanzen im freien Schnitt abschneiden, ist für die Schneideinrichtung 12 eine wesentlich höhere Umlaufgeschwindigkeit als für die Endlosförderer 6, 7 vorteilhaft.

Des weiteren ist eine zum Endlosförderer 6, 7 gegenläufige Umlaufrichtung der Schneideinrichtung 12 nicht notwendig aber vorteilhaft, da so wirkungsvoll die Verunreinigung des Erntegutes durch Unkräuter, Erdreste oder dergleichen in Bodennähe befindlichen durch ihre Abführung durch die Schneideinrichtung 12 nach außen vermieden wird. Außerdem bewirkt die gegenläufige Umlaufrichtung der Schneideinrichtung 12 zum Endlosförderer 6, 7, dass das abgeschnittene Erntegut noch zusätzlich gegen die Halte- und Führungselemente 5 der Endlosförderer 6, 7 gedrückt wird und so die sichere Erntegutförderung noch verbessert.

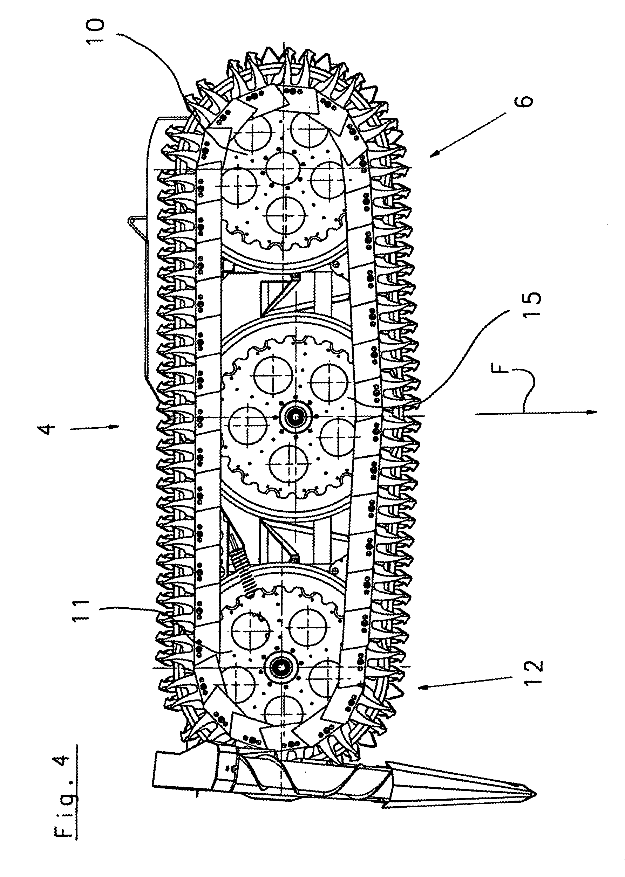

In der Draufsicht der Fig. 4 des Schneid- und Förderaggregates 4 eines erfindungsgemäßen Erntegerätes 1 sind nochmals die Antriebsräder 10 und die Umlenkräder 11 und besonders die durch diese Räder bestimmten Umlaufbahnen des Endlosförderers 6 und der Schneideinrichtung 12 gut zu erkennen, wobei hier auch der Einfluss eines weiteren Führungsrades 15 auf die Umlaufbahnen sichtbar wird. Das weitere Führungsrad 15 dient den vorderen in Fahrt- und Arbeitsrichtung F zeigenden, Erntegut abschneidenden und aufnehmenden Trums des Endlosförderers 6 und der Schneideinrichtung 12 als Führung und Stabilisierung. Diese Funktion könnte in anderen Ausführungsformen auch durch kleinere Räder oder Rollen oder durch Gleitschienen erfüllt werden. Durch die Anordnung des Führungsrades 15 in der Form, das die Umlaufbahnen eine Richtungsänderung erfahren, wird die Führungswirkung des Führungsrades 15 wesentlich verstärkt, was wiederum eine geringere Spannung des Endlosförderers 6 und der Schneideinrichtung 12 zulässt.

Außerdem kann das Führungsrad 15 auch gleichzeitig die Spannfunktion für den Endlosförderer 6 und der Schneideinrichtung 12 übernehmen

Die in Fig. 4 sichtbare parallele Führung der Umlaufbahnen von Endlosförderer 6 und Scheideinrichtung 12 ist nur in dem in Fahrt- und Arbeitsrichtung F weisenden Bereich, in dem Erntegut abgeschnitten wird, funktionsbedingt notwendig.

Weitere Ausführungsformen mit unterschiedlichen Umlaufbahnen im übrigen Bereich durch verschiedenste Antriebs- Umlenk- und Spannelemente für den Endlosförderer 6, 7 und der Schneideinrichtung 12 sind ebenfalls denkbar.

## Patentansprüche

1. Emtegerät (1) zum Ernten von Mais oder dergleichen stängelartigem Erntegut, wobei das Erntegerät (1) zumindest einen umlaufenden Endlosförderer (6,7) mit nach außen weisenden Halte- und Führungselementen (5) für aufgenommenes Erntegut umfasst und insbesondere als Vorsatz für eine selbstfahrende Erntemaschine (2) ausgebildet ist und zumindest eine Schneideinrichtung (12) aufweist, mit der das stängelartige Erntegut vor der Weiterverarbeitung durch das Emtegerät (1) bzw. durch die Erntemaschine (2) bodennah abgetrennt wird, wobei die Schneideinrichtung (12) durch mindestens ein flexibles Trägerelement (13) mit nach außen gerichtet angebrachten, eine Schneidebene bildenden Schneidelementen (14) gebildet ist und das flexible Trägerelement (13) um zumindest zwei Antriebs- und/oder Umlenkräder (10, 11) unabhängig vom umlaufenden Endlosförderer (6, 7) endlos umläuft **dadurch gekennzeichnet, dass** die nach außen gerichteten Schneidelemente (14) das Erntegut gegenschneidenlos im freien Schnitt abtrennen.

2. Emtegerät (1) nach Anspruch 1, **dadurch gekennzeichnet, dass** das flexible Trägerelement (13) durch einen Riemen gebildet wird.

3. Emtegerät (1) nach Anspruch 1, **dadurch gekennzeichnet, dass** das flexible Trägerelement (13) durch eine Gliederkette gebildet wird.

4. Erntegerät (1) nach einem oder mehreren der vorstehenden Ansprüche, **dadurch gekennzeichnet, dass** die Schneidebene der Schneideinrichtung (12) unterhalb der von den Halte- und Führungselementen (5) des Endlosförderers gebildeten Halte- und Führungsebenen zumindest annähernd parallel zu diesen verläuft.

5. Erntegerät (1) nach einem oder mehreren der vorstehenden Ansprüche, **dadurch gekennzeichnet, dass** die von den Schneidelementen (14) beschriebene Umlaufbahn in Blickrichtung von oben auf das Emtegerät (1) zumindest in dem Bereich, in dem die Schneidelemente (14) zumindest annähernd in Fahrt- und Arbeitsrichtung (F) ausgerichtet sind, annähernd parallel zu der Umlaufbahn des Endlosförderers (6, 7) verläuft.

6. Erntegerät (1) nach einem oder mehreren der vorstehenden Ansprüche, **dadurch gekennzeichnet, dass** die Schneideinrichtung (12) gleich der Umlaufrichtung (U1, U2) des Endlosförderers (6, 7) antreibbar ist.

7. Emtegerät (1) nach einem oder mehreren der vorstehenden Ansprüche, **dadurch gekennzeichnet, dass** die Schneideinrichtung (12) entgegen der Umlaufrichtung (U1, U2) des Endlosförderers (6, 7) antreibbar ist.

8. Emtegerät (1) nach Anspruch 6 oder 7, **dadurch gekennzeichnet, dass** die Umlaufgeschwindigkeiten des Endlosförderers (6, 7) und der Schneideinrichtung (12) ungleich sind.

9. Emtegerät (1) nach einem oder mehreren der vorstehenden Ansprüche, **dadurch gekennzeichnet, dass** durch die Anordnung zumindest eines Führungs- und/oder Spannelementes (15) zwischen zwei Antriebs- und/oder Umlenkräder (10, 11) die Umlaufbahnen des Endlosförderers (6, 7) und der Schneideinrichtung (12) an der Stelle des Führungs- und/oder Spannelementes (15) eine Richtungsänderung erfahren.

10. Erntegerät (1) nach Anspruch 9, **dadurch gekennzeichnet, dass** die in Fahrt- und Arbeitsrichtung (F) vorderen, annähernd quer zur Fahrt- und Arbeitsrichtung (F) verlaufenden Abschnitte der Umlaufbahnen des Endlosförderers (6, 7) und der Schneideinrichtung (12) in Blickrichtung von oben auf das Emtegerät (1) gesehen eine in etwa konvexe Form aufweisen.

## Claims

1. Harvesting unit (1) for harvesting maize or the like stalked crops for harvesting, the harvesting unit (1) having at least one circulating continuous feeder (6, 7) having outward pointing holding and guiding members (5) for crop for harvesting which is picked up and taking the form of, in particular, a front-mounted attachment for a self-propelled harvester (2) and having at least one cutting means (12) by which the stalked crop for harvesting is severed close to the ground prior to further processing by the harvesting unit (1) or the harvester (2), the cutting means (12) being formed by at least one flexible carrier member (13) having cutting members (14) which are mounted to point outwards and which form a plane of cut, and the flexible carrier member (13) circulating continuously around at least two driving and/or return pulleys (10, 11) independently of the circulating continuous feeder (6, 7), **characterised in that** the outwardly directed cutting members sever (14) the crop for harvesting by a free cut with no mating cutting edges.

2. Harvesting unit (1) according to claim 1, **characterised in that** the flexible carrier member (13) is formed by a belt.

3. Harvesting unit (1) according to claim 1, **characterised in that** the flexible carrier member (13) is formed by a link chain.

4. Harvesting unit (1) according to one or more of the foregoing claims, **characterised in that** the plane of cut of the cutting means (12) extends below the holding and guiding planes defined by the holding and guiding members (5) of the continuous feeder and approximately parallel to these planes.

5. Harvesting unit (1) according to one or more of the foregoing claims, **characterised in that** the path of circulation followed by the cutting members (14) extends, when the harvesting unit (1) is seen from above, approximately parallel to the path of circulation of the continuous feeder (6, 7), at least **in that** region in which the cutting members (14) are aligned at least approximately in the direction of travel and operation (F).

6. Harvesting unit (1) according to one or more of the foregoing claims, **characterised in that** the cutting means (12) can be driven in the same direction of circulation (U1, U2) as the continuous feeder (6, 7).

7. Harvesting unit (1) according to one or more of the foregoing claims, **characterised in that** the cutting means (12) can be driven in the opposite direction of circulation (U1, U2) from the continuous feeder (6, 7).

8. Harvesting unit (1) according to claim 6 or 7, **characterised in that** the speeds of circulation of the continuous feeder (6, 7) and the cutting means (12) are not the same.

9. Harvesting unit (1) according to one or more of the foregoing claims, **characterised in that**, as a result of the arrangement of at least one guiding and/or tensioning member (15) between two driving and/or return pulleys (10, 11), the paths of circulation of the continuous feeder (6, 7) and the cutting means (12) undergo a change of direction at the point at which the guiding and/or tensioning member (15) is situated.

10. Harvesting unit (1) according to claim 9, **characterised in that** those portions of the paths of circulation of the continuous feeder (6, 7) and the cutting means (12) which are at the front in the direction of travel and operation (F) and which extend approximately transversely to the direction of travel and operation (F) are of an approximately convex shape when the harvesting unit (1) is seen from above.

## Revendications

1. Appareil de récolte (1) pour récolter du maïs ou produits de récolte sur tiges, analogues, cet appareil (1) comportant au moins un convoyeur sans fin (6, 7) munie d'éléments de fixation et de guidage (5) dirigés vers l'extérieur pour recevoir les produits de récolte, cet appareil notamment destiné à être installé à l'avant d'une récolteuse automotrice (2) comporte au moins une installation de coupe (12) pour couper les produits de récolte sur tiges avant de les traiter dans l'appareil de récolte (1) ou dans la récolteuse (2), la coupe se faisant à proximité du sol et l'installation de coupe (12) est formée par au moins un élément de support (13) souple, avec des éléments de coupe (14), dirigés vers l'extérieur, et formant un plan de coupe et l'élément de support souple (13) tourne sans fin autour d'au moins deux poulies d'entraînement et/ou de renvoi (10, 11), indépendamment du convoyeur sans fin (6, 7),
**caractérisé en ce que**
les éléments de coupe (14) dirigés vers l'extérieur coupent les produits de récolte en coupe libre sans contre-couteau.

2. Appareil de récolte (1) selon la revendication 1,
**caractérisé en ce que**
l'élément de support (13), souple, est constitué par une courroie.

3. Appareil de récolte (1) selon la revendication 1,
**caractérisé en ce que**
l'élément de support (13), souple, est constitué par une chaîne à maillons.

4. Appareil de récolte (1) selon l'une ou plusieurs des revendications précédentes,
**caractérisé en ce que**
le plan de coupe de l'installation de coupe (12) passe sous les plans de fixation et de guidage formés par les éléments de fixation et de guidage (5) du transporteur sans fin, en passant parallèlement à celui-ci.

5. Appareil de récolte (1) selon l'une ou plusieurs des revendications précédentes,
**caractérisé en ce que**
la trajectoire de circulation décrite par les éléments de coupe (14), est dirigée, en vue de dessus, sur l'appareil de récolte (1), au moins dans la région dans laquelle les éléments de coupe (14) sont alignés au moins sensiblement par rapport à la direction de déplacement et de travail (F), d'une manière sensiblement parallèle à la trajectoire du convoyeur sans fin (6, 7).

6. Appareil de récolte (1) selon l'une ou plusieurs des revendications précédentes,
**caractérisé en ce que**
l'installation de coupe (12) est entraînée dans le même sens de circulation (U1, U2) que celui du convoyeur sans fin (6, 7).

7. Appareil de récolte (1) selon l'une ou plusieurs des revendications précédentes,
**caractérisé en ce que**
l'installation de coupe (12) est entraînée dans le sens opposé au sens de circulation (U1, U2) du convoyeur sans fin (6, 7).

8. Appareil de récolte (1) selon la revendication 6 ou 7,
**caractérisé en ce que**
la vitesse de circulation du convoyeur sans fin (6, 7) et celle de l'installation de coupe (12) sont différentes.

9. Appareil de récolte (1) selon l'une ou plusieurs des revendications précédentes,
**caractérisé par**
au moins un élément de guidage et/ou de tension (15) installé entre deux poulies d'entraînement et/ou de renvoi (10, 11) qui change le sens de circulation du convoyeur sans fin (6, 7) et de l'installation de coupe (12) à l'endroit de l'élément de guidage et/ou de tension (15).

10. Appareil de récolte (1) selon la revendication 9,
**caractérisé en ce que**
les segments avant des trajectoires du convoyeur sans fin (6, 7) et de l'installation de coupe (12), en vue de dessus sur l'appareil de récolte (1), et qui en marche avant et dans la direction de travail (F) sont sensiblement dirigés transversalement à la direction de déplacement et à la direction de travail (F), ont une forme sensiblement convexe.
